# EUROPÄISCHE PATENTSCHRIFT

(11) **EP 1 893 456 B1**
(45) Veröffentlichungstag und Bekanntmachung des Hinweises auf die Patenterteilung: **20.08.2008**
(21) Anmeldenummer: 06724530.8
(22) Anmeldetag: 24.04.2006
(51) Int. Cl.: B60R 25/02

(54) **VERRIEGELUNGSVORRICHTUNG FÜR EINE LENKSPINDEL MIT WÄHLBARER ABSCHALTPOSITION BEI BEWEGUNG DER SPERRBOLZENANORDNUNG IN RICHTUNG EINER FREIGABEENDPOSITION**
LOCKING DEVICE FOR A STEERING SHAFT HAVING A SELECTABLE SWITCHING POSITION WHEN THE LOCKING BOLT ARRANGEMENT IS DISPLACED IN THE DIRECTION OF A RELEASE END POSITION
DISPOSITIF DE VERROUILLAGE DESTINE A UN ARBRE DE DIRECTION PRESENTANT UNE POSITION D'ARRET SELECTIONNABLE EN CAS DE MOUVEMENT DU DISPOSITIF DE BOULON DE BLOCAGE EN DIRECTION DE LA POSITION TERMINALE DE LIBERATION

(30) Priorität: 15.06.2005 DE 102005027777
(43) Veröffentlichungstag der Anmeldung: 05.03.2008
(73) Patentinhaber: Huf Hülsbeck & Fürst GmbH & Co. KG, 42551 Velbert (DE)
(72) Erfinder: HIRCHE, Mark, 42549 Velbert (DE); LIMBURG, Hans-Joachim, 85247 Schwabhausen (DE); ZILLMANN, Horst, 81243 München (DE); VAN DEN BOOM, Andreas, 45309 Essen (DE)
(74) Vertreter: Bongards, Jochen
(86) Internationale Anmeldenummer: PCT/EP2006/003750
(87) Internationale Veröffentlichungsnummer: WO 2006/133760

(56) Entgegenhaltungen:
- EP-A- 1 281 589
- DE-C1- 10 109 609

## Beschreibung

Die Erfindung betrifft eine Verriegelungsvorrichtung für eine Lenkspindel mit einer Sperrbolzenanordnung, einem Steuerglied, das mit der Sperrbolzenanordnung derart gekoppelt ist, daß durch Drehen des Steuerglieds die Sperrbolzenanordnung in ihrer axialen Richtung zwischen einer Sperrposition und einer Freigabeendposition bewegbar ist, einem Motorantrieb zum Drehen des Steuerglieds, einer Steuerelektronik zum Steuern des Motorantriebs und einer mit der Steuerelektronik gekoppelten Sensoranordnung zum Erfassen wenigstens einer axialen Position der Sperrbolzenanordnung, wobei die Steuerelektronik dann, wenn sich die Sperrbolzenanordnung in der axialen Richtung aus der Sperrposition zu der Freigabeendposition bewegt und die Sensoranordnung ein Ausgangssignal liefert, daß das Erreichen einer Abschaltposition der Sperrbolzenanordnung anzeigt, ein Abschalten des Motorantriebs bewirkt.

Eine Verriegelungsvorrichtung der eingangs genannten Art ist beispielsweise aus der Patentschrift DE 101 09 609 C1 bekannt. Das document EP-A-1281589 offenbart eine Verriegelungsvorrichtung gemäß dem Oberbegriff des Anspruchs 1. Diese Druckschrift beschreibt eine Verriegelungsvorrichtung (Lenkschloß) zum Verriegeln einer Lenkspindel eines Kraftfahrzeugs mittels eines Sperrbolzens, welcher zum Zwecke des verriegelns in Sperrnuten einer auf der Lenkspindel befestigten Sperrhülse eingreifen kann. Der rechteckige Sperrbolzen ist in einem Kanal eines Gehäuses axial verschieblich gelagert. Zur Axialverschiebung des Sperrbolzens zwischen der Verriegelungsstellung (oder Sperrposition) und der Entriegelungsstellung (oder Freigabeposition) ist ein von einem Elektromotor angetriebenes drehbares Steuerglied vorgesehen. Der Sperrbolzen ist mit dem Steuerglied über Führungseinrichtungen derart gekoppelt, daß sich der Sperrbolzen bei Drehung des Steuerglieds in axialer Richtung bewegt. Das Steuerglied ist als hülsenförmiges Schneckenrad mit einer Innenschnecke und einer Außenverzahnung ausgebildet. In die Außenverzahnung greift eine auf der Welle des Elektromotors befestigte Antriebsschnecke ein. Der Sperrbolzen greift mit Vorsprüngen in die Innenschnecke des Steuerglieds ein, wobei die Vorsprünge von einer den Sperrbolzen in Richtung der Lenkspindel drückenden Federkraft in axialer Richtung gegen Führungsflächen der Innenschnecke des Steuerglieds gedrückt werden. Wenn sich das Steuerglied dreht, so laufen die Führungsflächen unter den Vorsprüngen des Sperrbolzens weg, wobei die Vorsprünge aufgrund eines Anstiegs oder Abfalls der Führungsflächen entlang einer Umfangsrichtung des Steuerglieds in axialer Richtung in die Sperrposition bzw. die Freigabeposition bewegt werden.

An beide Enden der ansteigenden bzw. abfallenden Führungsflächen des Sperrglieds schließen sich Endflächen an, die in einer zur axialen Richtung senkrechten Ebene liegen. Sobald die Vorsprünge des Sperrbolzens beim Drehen des Steuerglieds auf den Endflächen angelangt sind, so bewirkt ein Weiterdrehen des Steuerglieds keine weitere axiale Bewegung des Sperrbolzens, da die Vorsprünge des Sperrbolzens auf den Endflächen in derselben axialen Position (d.h. entweder der Sperrposition oder der Freigabeposition) verweilen.

Wenn beispielsweise nach dem Erreichen der Freigabeposition der das Steuerglied antreibende Elektromotor nicht sofort, sondern erst mit einer gewissen Verzögerung abgeschaltet wird, so gleiten die ebenen Endflächen unter den Vorsprüngen des Sperrbolzens weg, ohne diesen weiter in axialer Richtung zu bewegen. Ein Nachlaufen des Elektromotors nach Erreichen der Freigabeposition wäre somit unproblematisch, solange die ebenen Endflächen einen ausreichenden Drehwinkel einnehmen.

Das Erreichen der Entriegelungsstellung oder Freigabeposition wird mit Hilfe eines mechanischen Endschalters erfaßt, auf den der Sperrbolzen direkt einwirkt. Wird der Endschalter beim Erreichen der Entriegelungsstellung betätigt, so wird daraufhin der Elektromotor abgeschaltet (von einer mit dem Endschalter und dem Elektromotor gekoppelten Steuereinrichtung). Die Position des Sperrbolzens, welche ein Abschalten des Motors auslöst, d.h. die Abschaltposition, soll bei der bekannten Anordnung gleichzeitig der Entriegelungs- bzw. Freigabeposition entsprechen, bei der die Vorsprünge des Sperrbolzens auf den entsprechenden Endflächen der Innenschneckenführung des Steuerglieds aufliegt.

Um technologische Toleranzen zu kompensieren, ist es selbstverständlich erforderlich, den Endschalter so auszubilden, daß er bereits dann ein Abschaltsignal erzeugt, wenn der sich in die Freigabeposition bewegende Sperrbolzen noch nicht die Freigabeendposition (Auflage der Vorsprünge auf der Endfläche) erreicht hat. Anderenfalls könnte es nämlich geschehen, daß der Endschalter selbst dann noch nicht anspricht, wenn die Vorsprünge des Sperrbolzens bereits auf den Endflächen des Steuerglieds aufliegen und sich nicht weiter in axialer Richtung bewegen, so daß überhaupt kein Abschaltsignal erzeugt wird. Wenn demnach der Endschalter bereits ansprechen muß, bevor die Vorsprünge des Sperrbolzens auf den Endflächen des Steuerglieds angelangt sind, so muß außerdem gewährleistet werden, daß sich das Steuerglied nach Auslösen des Endschalters zumindest solange weiterbewegt, daß die Vorsprünge auf den Endflächen ankommen. Es ist somit eine Mindestverzögerung der Motorabschaltung vorzusehen. Somit ist eine exakte Positionierung des die Motorabschaltung auslösenden Endschalters erforderlich, was einen erhöhten konstruktiven Aufwand bedingt.

Alternativ könnte das Abschaltsignal oder Bremssignal für den Elektromotorantrieb auch von einem Sensor abgeleitet werden, der eine Drehstellung des Steuerglieds erfaßt, bei deren Erreichen mit dem Abbremsen des Motorantriebs begonnen werden soll. Dies würde jedoch neben dem Sensor zum Erfassen der Drehstellung, die der Freigabeendstellung entspricht, einen weiteren Drehstellungssensor erfordern.

Die Schwierigkeiten bei der Positionierung des Endschalters erhöhen sich, wenn anstelle eines mechanischen Endschalters ein binärer Hall-Sensor verwendet wird, um die Abschaltposition des Sperrbolzens zu erfassen. Aufgrund technologischer Toleranzen sowohl des binären Hall-Sensors als auch des den Hall-Sensor betätigenden Permanentmagneten und dessen Anbringung ist der Abstand zwischen Permanentmagnet und Hall-Sensoroberfläche, bei dem der Hall-Sensor umschaltet, größeren Schwankungen unterworfen.

Aufgabe der Erfindung ist es, die Anforderungen an eine exakte Positionierung des die Abschaltposition des Sperrbolzens erfassenden Sensors zu verringern.

Diese Aufgabe wird erfindungsgemäß mit einer Verriegelungsvorrichtung mit den Merkmalen des Anspruchs 1 gelöst.

Erfindungsgemäß ist bei einer Verriegelungsvorrichtung der eingangs genannten Art die Sensoranordnung so ausgebildet, daß das Ausgangssignal zumindest in einem der Freigabeendposition vorausgehenden und eine gewünschte Abschaltposition einschließenden Bewegungsintervall der Sperrbolzenanordnung eine Mehrzahl von monoton von der axialen Position abhängigen Ausgangssignalwerten derart annehmen kann, daß eine Auswahl der gewünschten Abschaltposition durch Auswahl eines zugehörigen Ausgangssignalwerts möglich ist. Ferner weist die Steuerelektronik eine Auswahleinrichtung auf, die die Auswahl eines der gewünschten Abschaltposition entsprechenden Ausgangssignalwerts als Schwellwert ermöglicht, so daß bei Erreichen, Überschreiten oder Unterschreiten des Schwellwerts ein Signal ausgegeben wird, daß das Abschalten des Motorantriebs bewirkt. Unter einer monotonen Abhängigkeit der Ausgangssignalwerte von der axialen Position in dem Bewegungsintervall soll entweder eine monoton ansteigende Abhängigkeit, bei der die Ausgangssignalwerte mit zunehmenden Abstand der Sperrbolzenanordnung von der Lenkspindel ansteigen, oder eine monoton abfallende Abhängigkeit, bei der die Ausgangssignalwerte abfallen, verstanden werden. Eine lineare Abhängigkeit zwischen Ausgangssignalwerten und Wegänderung ist in dem Bewegungsintervall zwar bevorzugt, nicht aber erforderlich.

Die erfindungsgemäße Verriegelungsvorrichtung ermöglicht die Auswahl einer gewünschten Abschaltposition nach dem Zusammenbau der Verriegelungsvorrichtung. Es braucht lediglich eine geeignete Signalschnittstelle an der Steuerelektronik vorgesehen zu werden. Eine exakte Positionierung des die axiale Position des Sperrbolzen erfassenden Sensors ist nicht erforderlich, solange der gewünschten Abschaltposition ein zugehöriger Ausgangssignalwert eindeutig zuordenbar ist.

Nach dem Zusammenbau der Verriegelungsvorrichtung wird beispielsweise diejenige Position der Sperrbolzenanordnung eingestellt, bei der das Bremssignal ausgelöst werden soll (d.h. die gewünschte Abschaltposition). Dann wird ein dem zugehörigen Ausgangssignalwert entsprechender Referenzwert gespeichert. Im Betrieb wird der Bremsvorgang nur dann ausgelöst, wenn beim Entriegeln das Ausgangssignal den Referenzwert erreicht.

Das Ausgangssignal der Sensoranordnung kann beispielsweise ein Signal sein, das mehrere diskrete Werte annehmen kann, die jeweils einem bestimmten Teilintervall des Bewegungsintervalls zugeordnet sind. Vorzugsweise ist das Ausgangssignal jedoch ein analoges Ausgangssignal, welches in dem Bewegungsintervall entweder monoton ansteigt oder monoton abfällt. Die Abhängigkeit des Ausgangssignals vom Weg ist vorzugsweise zumindest näherungsweise linear, kann aber auch beispielsweise quadratisch oder logarithmisch sein. Bei dieser bevorzugten Ausführungsform weist die Steuerelektronik vorzugsweise einen Analog-Digital-Umsetzer auf, der das analoge Ausgangssignal in einen digitalen Ausgabewert umsetzt. Ein derartiger Analog-Digital-Umsetzer steht beispielsweise kostengünstig in einem zur Implementierung der Steuerelektronik verwendeten Controller zur Verfügung.

Die in der Steuerelektronik verwendete Auswahleinrichtung könnte beispielsweise mit Hilfe einer an einen Anschluß der Steuerelektronik angelegten Spannung eingestellt werden. Vorzugsweise ist die Auswahleinrichtung jedoch programmierbar, beispielsweise unter Verwendung der in einem vorhandenen Controller implementierten Programme.

Bei einer Verriegelungsvorrichtung, bei der die Sensoranordnung ein analoges Ausgangssignal liefert, könnte die Auswahleinrichtung einen Analogsignalkomparator und einen Referenzspannungsgenerator umfassen. Der Analogsignalkomparator empfängt die von dem Referenzspannungsgenerator erzeugte Spannung und vergleicht diese mit dem analogen Ausgangssignal. Die Referenzspannung des Referenzspannungsgenerators könnte mit Hilfe einer externen Spannung einstellbar oder wiederum programmierbar sein. Wenn die Steuerelektronik - wie bei einer bevorzugten Ausführungsform - einen Analog-Digital-Umsetzer aufweist, umfaßt die Auswahleinrichtung vorzugsweise einen mit dem Analog-Digital-Umsetzer gekoppelten Komparator, der den dem analogen Ausgangssignal entsprechenden Digitalwert mit einem Referenzwert vergleicht, wobei der Referenzwert dem Komparator aus einem Referenzwertspeicher zugeführt wird. Diese Funktion des digitalen Komparators kann auch mit Hilfe eines in einem Controller abgearbeiteten Programms realisiert werden.

Eine bevorzugte Weiterbildung der erfindungsgemäßen Verriegelungsvorrichtung ist dadurch gekennzeichnet, daß die Sensoranordnung wenigstens einen Hall-Sensor aufweist, der so angeordnet ist, daß er die Annäherung eines mit der Sperrbolzenanordnung gekoppelten Magneten zumindest in einem Abschnitt des Bewegungsintervalls erfassen kann. Hierbei könnten mehrere, gestaffelt in axialer Richtung hintereinander angeordnete binäre Hall-Sensoren verwendet werden, die bei einer Bewegung des Sperrbolzens in die Freigabeendposition nacheinander von einem Magneten ausgelöst werden. Vorzugsweise weist die Sensoranordnung jedoch einen analogen Hall-Sensor auf, der so angeordnet ist, daß er in dem Bewegungsintervall ein von der axialen Position monoton abhängiges Ausgangssignal ausgibt. Die Verwendung eines analogen Hall-Sensors in einer Verriegelungsvorrichtung ist beispielsweise aus der Patentschrift DE 199 29 435 C2 bekannt. Dort wird der analoge Hall-Sensor in Kombination mit einem binären Hall-Sensor zur redundanten Erfassung einer Entriegelungsposition verwendet, wobei der Erfassungsbereich des dort verwendeten analogen Hall-Sensors sowohl die Verriegelungsposition als auch die Entriegelungsposition überdeckt. Ein derart breiter Erfassungsbereich ist bei dem für die Zwecke der vorliegenden Erfindung verwendeten analogen Hall-Sensor nicht erforderlich; der Erfassungsbereich des hier vorteilhaft verwendeten analogen Hall-Sensors braucht lediglich das der Freigabeendposition vorausgehende und die gewünschte Abschaltposition einschließende Bewegungsintervall der Sperrbolzenanordnung zu überdecken, wobei die technologischen Toleranzen des Einbaus und der Ausgestaltung der Hall-Sensoranordnung und des Permanentmagneten zu berücksichtigen sind.

Eine bevorzugte und vorteilhafte Ausführungsform der erfindungsgemäßen Verriegelungsvorrichtung ist dadurch gekennzeichnet, daß die Sensoranordnung zusätzlich wenigstens einen Sensor zum Erfassen einer Drehstellung des Steuerglieds umfaßt. Vorzugsweise ist die Sperrbolzenanordnung durch eine Ausnehmung des Steuerglieds derart hindurchgeführt, daß das Steuerglied um die Sperrbolzenanordnung herum drehbar ist, wobei ein erster Permanentmagnet an der Sperrbolzenanordnung befestigt ist und sich bei Annäherung an die Freigabeendposition an einen analogen ersten Hall-Sensor annähert, wobei wenigstens ein zweiter Permanentmagnet auf der Oberseite des Steuerglieds derart befestigt ist, daß er bei Erreichen einer vorgegebenen Drehstellung des Steuerglieds auf einen zweiten Hall-Sensor einwirkt. Es ist vorteilhaft, wenn die Permanentmagneten auf der Sperrbolzenanordnung und dem Steuerglied derart angeordnet sind, daß der analoge erste Hall-Sensor und der wenigstens eine zweite Hall-Sensor in einer Ebene angeordnet werden können. Vorzugsweise sind der erste Hall-Sensor und der wenigstens eine zweite Hall-Sensor auf einer gemeinsamen Schaltungsplatine angeordnet. Dadurch können sämtliche Sensorbauelemente und die Steuerelektronik einschließlich der Motorsteuerung auf einer Schaltungsplatine untergebracht werden, was die Herstellung vereinfacht. Zudem gestattet eine solche Anordnung eine geringe Bauhöhe der Verriegelungsvorrichtung.

Eine bevorzugte Weiterbildung der Erfindung ist dadurch gekennzeichnet, daß der wenigstens eine auf dem Steuerglied angeordnete Permanentmagnet und der wenigstens eine zweite Hall-Sensor so angeordnet sind, daß sowohl die der Sperrposition als auch die der Freigabeendposition der Sperrbolzenanordnung entsprechenden Drehstellungen des Steuerglieds erfaßt werden können. Die Erfassung der beiden Drehstellungen des Steuerglieds in Kombination mit der Erfassung der Sperrbolzenposition durch den analogen Hall-Sensor gestatten ein hohes Maß der Sicherheit der Erfassung der Freigabeposition in Kombination mit einer sicheren Motoransteuerung, insbesondere einem rechtzeitigen Auslösen des Abbremsens des Motors.

Vorteilhafte und/oder bevorzugte Weiterbildungen der Erfindung sind in Unteransprüchen gekennzeichnet.

Im folgenden wird die Erfindung anhand eines in den Zeichnungen dargestellten bevorzugten Ausführungsbeispiels näher erläutert. In den Zeichnungen zeigen:
Fig. 1: eine Draufsicht auf eine Ausführungsform einer erfindungsgemäßen Verriegelungsvorrichtung bei abgenommenem Gehäusedeckel und entnommener Steuerelektronik-Schaltungsplatine;
Fig. 2A: eine Schnittansicht der in Figur 1 gezeigten Verriegelungsvorrichtung entlang der Linie A-A in Verriegelungsstellung und mit eingesetzter Schaltungsplatine und aufgesetztem Gehäusedeckel;
Fig. 2B: eine Schnittansicht der in Figur 2A dargestellten Verriegelungsvorrichtung entlang der Linie C-C;
Fig. 3A: eine Schnittansicht der in Figur 1 gezeigten Verriegelungsvorrichtung entlang der Linie A-A in der Entriegelungsstellung und mit eingesetzter Schaltungsplatine und aufgesetztem Gehäusedeckel;
Fig. 3B: eine Schnittansicht der in Figur 3A dargestellten Verriegelungsvorrichtung entlang der Linie D-D;
Fig. 4A-4C: schematische Draufsichten auf die in Figur 1 gezeigte Verriegelungsvorrichtung, die drei Stellungen des Steuerglieds auf dem Wege von der Sperrposition in die Freigabeposition zeigen;
Fig. 5: ein Diagramm, das die Abhängigkeit der Ausgangsspannung eines analogen Hall-Sensors, der die Annäherung eines mit dem Sperrbolzen verbundenen Permanentmagneten erfaßt, vom Drehweg des Steuerglieds zeigt; und
Fig. 6: eine Blockdarstellung der Steuerelektronik mit Sensoranordnung.

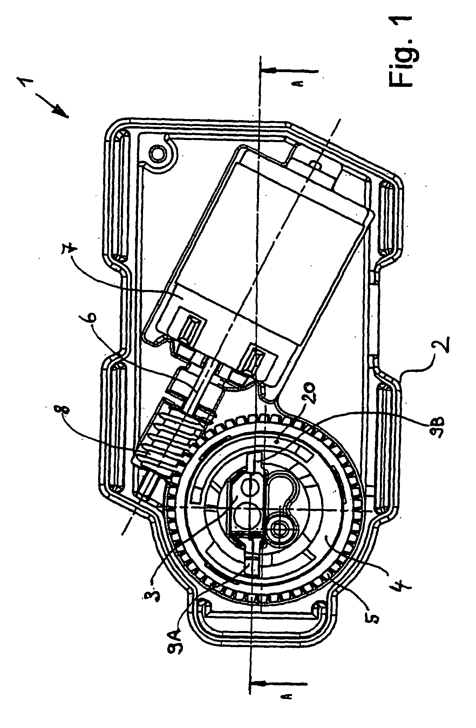

Figur 1 zeigt eine Draufsicht auf ein Ausführungsbeispiel der erfindungsgemäßen Verriegelungsvorrichtung 1 bei abgenommenen Gehäusedeckel und entnommener Steuerelektronik-Schaltungsplatine. Ein Gehäuse 2 umschließt eine Führung und einen Antrieb für einen Sperrbolzen. Mit Hilfe des Antriebs wird der Sperrbolzen in seiner axialen Richtung bewegt, wobei er in seiner Sperrposition oder Verriegelungsstellung in Nuten einer auf einer Lenkspindel befestigten Sperrhülse derart eingreift, daß die Lenkspindel nicht gedreht werden kann. In der Freigabeposition oder Entriegelungsstellung ist der Sperrbolzen aus der Sperrnut herausgezogen, so daß die Lenkspindel gedreht werden kann. Figur 1 zeigt eine Draufsicht auf eine Stirnseite des Sperrbolzens 3, wobei sich die axiale Richtung, in der sich der Sperrbolzen 3 bewegt, senkrecht zur Zeichnungsebene erstreckt. Der rechteckige Sperrbolzen 3 ist in einem zur Zeichnungsebene der Figur 1 senkrechten Führungskanal verdrehsicher gelagert. Ein als hülsenförmiges Schneckenrad mit einer Innenschnecke und einer Außenverzahnung ausgebildetes Steuerglied 4 umgibt den Sperrbolzen 3. Das Steuerglied 4 ist drehbar gelagert. In die Außenverzahnung 5 des Steuerglieds 4 greift eine auf einer Welle 6 eines Elektromotors 7 befestigte Antriebsschnecke 8 ein. Der Sperrbolzen 3 greift mit Vorsprüngen 9A, 9B in die Innenschnecke des Steuerglieds 4 ein, wobei die Vorsprünge 9A, 9B von einer den Sperrbolzen 3 in Richtung der Lenkspindel drückenden Federkraft in axialer Richtung gegen Führungsflächen der Innenschnecke des Steuerglieds 3 gedrückt werden. Wenn sich das Steuerglied 3 dreht, so laufen die Führungsflächen unter den Vorsprüngen 9A, 9B des Sperrbolzens 3 weg, wobei die Vorsprünge 9A, 9B aufgrund eines Anstiegs oder Abfalls der Führungsflächen entlang der Umfangsrichtung des Steuerglieds 3 in axialer Richtung in die Sperrposition bzw. die Freigabeposition bewegt werden.

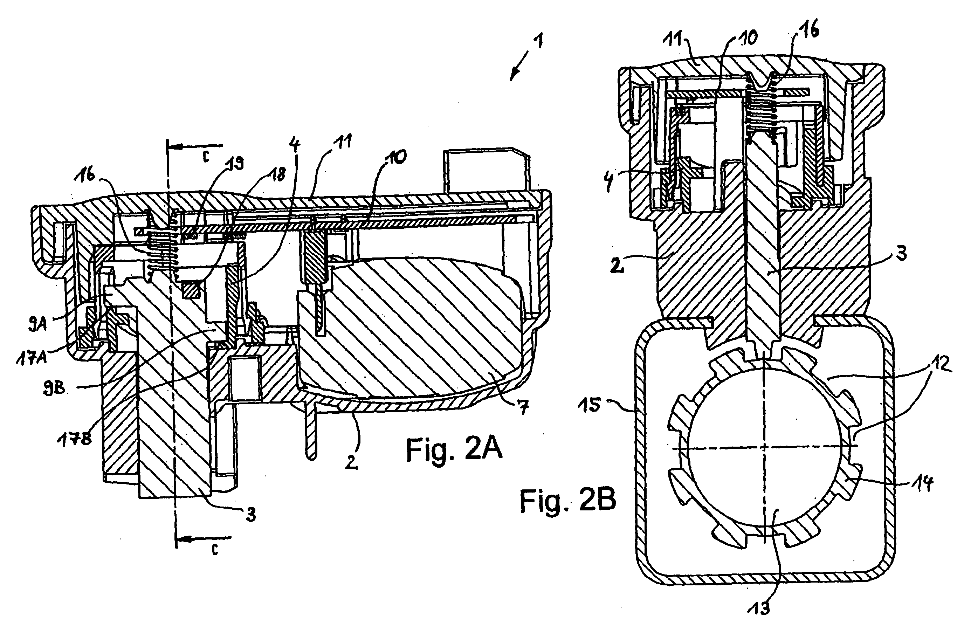

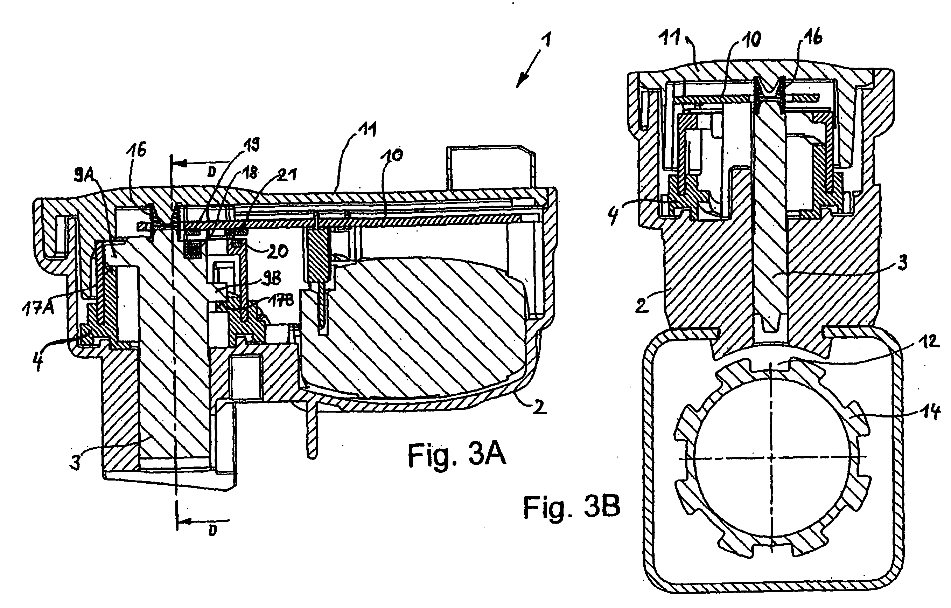

Die Figuren 2A, 2B, 3A und 3B zeigen Schnittansichten der in Figur 1 gezeigten Verriegelungsvorrichtung mit montierter Steuerelektronik-Schaltungsplatine 10 und aufgesetztem Gehäusedeckel 11. Hierbei zeigen die Figuren 2A und 3A Schnittansichten entlang der Linie A-A in Figur 1, wobei die Figur 2A eine Schnittansicht der Verriegelungsvorrichtung 1 zeigt, bei der sich der Sperrbolzen 3 in der Sperrposition befindet, während Figur 3A eine Schnittansicht der Verriegelungsvorrichtung 1 zeigt, bei der sich der Sperrbolzen 3 in der Freigabeposition befindet. Figur 2B zeigt eine Schnittansicht der Verriegelungsvorrichtung 1 entlang der Linie C-C in Figur 2A. Figur 3B zeigt die Schnittansicht entlang der Linie D-D der Figur 3A. Bei der Darstellung gemäß Figur 1 befindet sich die Verriegelungsvorrichtung in der Freigabeposition (entriegelte Stellung).

Bei der in den Figuren 2A und 2B dargestellten Sperrposition greift der Sperrbolzen 3 in Sperrnuten 12 einer auf der Lenkspindel 13 befestigten Sperrhülse 14 ein. Die Sperrhülse 14 weist mehrere gleichmäßig entlang ihres Umfangs verteilte, in axialer Richtung der Lenkspindel 13 verlaufende Sperrnuten 12 auf, die breiter sind als der der Lenkspindel 13 zugewandte vordere Abschnitt des Sperrbolzens 3, so daß der Sperrbolzen 3 nach einem Heranführen an die Lenkspindel 13 in eine Sperrnut 12 einrasten kann. Das Einrasten des Sperrbolzens 3 in eine Sperrnut 12 blockiert ein Weiterdrehen der Lenkspindel 13. Das Gehäuse 2 der Verriegelungsvorrichtung 1 ist in einer Aufnahme eines Mantelrohrs 15 der Lenksäule befestigt.

Eine sich gegen den Gehäusedeckel 11 der Verriegelungsvorrichtung 1 abstützende Feder 16 drückt den Sperrbolzen 3 in Richtung der Lenkspindel 13. Dadurch werden die der Lenkspindel 13 zugewandten Flächen der Vorsprünge 9A und 9B des Sperrbolzens 3 gegen Führungsflächen 17A bzw. 17B des Steuerglieds gedrückt.

An der von der Lenkspindel 13 abgewandten Stirnseite des Sperrbolzens 3 ist ein Permanentmagnet 18 befestigt. Diesem Permanentmagneten 18 ist ein analoger Hall-Sensor 19 zugeordnet, der auf der Schaltungsplatine 10 befestigt ist. Die von dem analogen Hall-Sensor 19 gelieferte Ausgangsspannung hängt von dem Abstand des Permanentmagneten 18 ab. Bei der in den Figuren 2A und 2B dargestellten Sperr- oder Verriegelungsstellung ist der Permanentmagnet 18 am weitesten vom analogen Hall-Sensor 19 entfernt.

Die Figuren 1, 3A und 3B zeigen die Verriegelungsvorrichtung in ihrer Freigabe- oder Entriegelungsstellung. Wie Figur 3B zu entnehmen ist, ist der Sperrbolzen 3 vollständig aus der Nut 12 der Sperrhülse 14 herausgefahren und in das Gehäuse 2 der Verriegelungsvorrichtung 1 zurückgezogen. Bei dieser Freigabeposition hat sich der an der Stirnseite des Sperrbolzens 3 befestigte Permanentmagnet 18 maximal an den Hall-Sensor 19 angenähert. In Figur 3A ist ferner ein weiterer Permanentmagnet 20 dargestellt, der in der von der Lenkspindel abgewandten Stirnseite des Steuerglieds 4 befestigt ist. Dieser Permanentmagnet 20 des Steuerglieds wirkt auf einen weiteren Hall-Sensor 21 ein, der ebenfalls auf der Schaltungsplatine 10 befestigt ist. Die Form des Permanentmagneten 20 ist in Figur 1 zu erkennen. Der Permanentmagnet 20 erstreckt sich bogenförmig entlang des Umfangs des Steuerglieds 4 und weist an den beiden Enden jeweils einen Nordpol und in der Mitte einen Südpol auf. Die Übergänge zwischen Nordpolen und Südpol sind durch eine Querlinie auf dem Magneten veranschaulicht. Der Hall-Sensor 21 spricht an, wenn der Nordpol-Südpol-Übergang des Permanentmagneten 20 unter dem Hall-Sensor 21 hindurchläuft. Der Hall-Sensor 21 zeigt ein binäres Ausgangssignal, welches einen von zwei möglichen Zuständen annehmen kann. Mit Hilfe des Hall-Sensors 21 und des Permanentmagneten 20 kann diejenige Drehstellung des Steuerglieds 4 erfaßt werden, die der Freigabeposition oder Entriegelungsstellung entspricht. Ein weiterer (in den Figuren 1 - 3B nicht gezeigter) Hall-Sensor ist auf der Schaltungsplatine 10 an einer Position angeordnet, an der er im Zusammenwirken mit dem Permanentmagneten 20 die der Sperrposition oder Verriegelungsstellung entsprechende Drehstellung des Steuerglieds 4 erfassen kann.

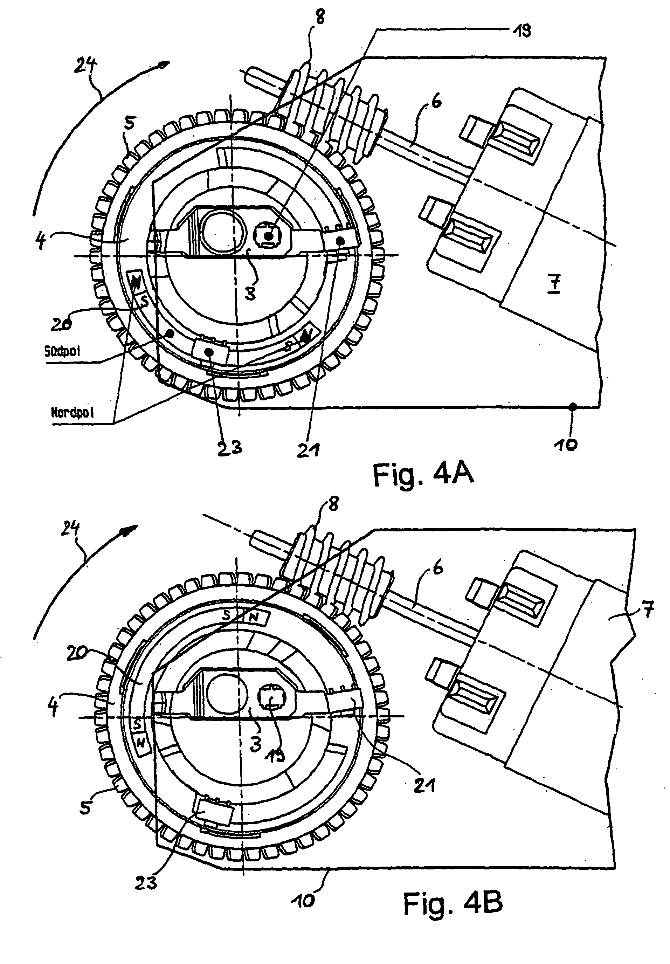

Die Figuren 4A - 4C veranschaulichen schematisch die Erfassung sowohl der Freigabeposition des Sperrbolzens 3 als auch verschiedener Drehstellungen des Steuerglieds 4 durch drei Hall-Sensoren, die mit einem auf der Stirnfläche des Sperrbolzens 3 untergebrachten Permanentmagneten und einem auf dem Steuerglied befestigten Permanentmagneten zusammenwirken. Die Figuren 4A - 4B zeigen schematisch den Elektromotor 7 mit seiner Antriebswelle 6 und der darauf befestigten Antriebsschnecke 8, ferner das Steuerglied 4 mit Außenverzahnung 5, in die die Antriebsschnecke 8 eingreift. Ferner ist die Schaltungsplatine 10 mit den darauf befestigten Hall-Sensoren 19, 21 und 23 gezeigt, sowie die auf die Hall-Sensoren einwirkenden Permanentmagneten. Der auf der Stirnfläche des Steuerglieds 4 befestigte Permanentmagnet erstreckt sich über ein Kreisbogensegment von etwa 96 Grad und weist an den Enden jeweils einen Nordpol und einen sich dazwischen erstreckenden Südpol auf (die Polarität des Permanentmagneten kann auch umgekehrt werden).

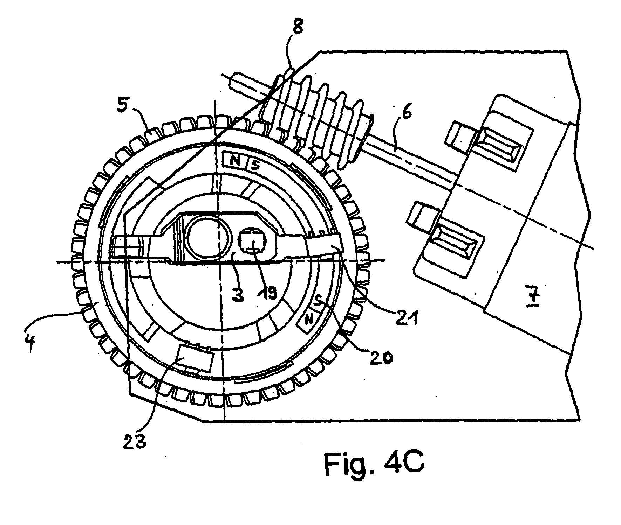

Figur 4A zeigt die Verriegelungsvorrichtung in einer Sperrposition, bei der sich der Permanentmagnet 20 des Steuerglieds 4 unter dem Hall-Sensor 23 befindet. Bei der in Figur 4A dargestellten Position befindet sich die Mitte des Permanentmagneten 20 unter dem Hall-Sensor 23. In der Sperrendposition ist das Steuerglied noch etwa 45 Grad entgegen dem Uhrzeigersinn weiter gedreht, als dies in Figur 4A gezeigt ist. Um von dieser Sperrposition in die Freigabeposition oder Entriegelungsstellung zu gelangen, wird der Elektromotor 7 so angesteuert, daß sich das Steuerglied 4 im Uhrzeigersinn in Richtung des Pfeils 24 dreht. Dabei bewegt sich der Permanentmagnet 20 weiter im Uhrzeigersinn, so daß er den die Sperrposition erfassenden Hall-Sensor 23 verläßt. Eine Drehstellung, bei der der Permanentmagnet 20 den Hall-Sensor 23 verlassen hat, aber noch nicht den Hall-Sensor 21 erreicht hat, ist in Figur 4B dargestellt. Wird das Steuerglied weiter im Uhrzeigersinn gedreht, so erreicht schließlich der Permanentmagnet 20 derart den Sensor 21, daß zunächst der Nordpol und dann der Nordpol-Südpol-Übergang unter dem Hall-Sensor 21 hindurchläuft. Der Hall-Sensor 21 erfaßt somit das Erreichen einer Freigabeposition oder Entriegelungsstellung durch das Steuerglied 4. Figur 4C zeigt die Anordnung in einer Freigabeposition, bei der sich der Hall-Sensor 21 etwa in der Mitte des Permanentmagneten 20 befindet. Auch hier ist ein Weiterdrehen im Uhrzeigersinn möglich, bis der Übergang vom Südpol zum Nordpol den Hall-Sensor 21 erreicht (etwa 45 Grad hinter der in Figur 4C gezeigten Stellung).

Gleichzeitig mit dem Drehen des Steuerglieds 4 bewegt sich der Sperrbolzen 3 senkrecht zur Zeichnungsebene der Figuren 4A - 4C auf den analogen Hall-Sensor 19 zu. Dabei ist der Hall-Sensor 19 so positioniert und ausgebildet, daß sich seine Ausgangsspannung insbesondere in demjenigen Intervall merklich ändert, das der Freigabeendposition vorausgeht und diejenige Position umfaßt, bei der das Abschalten des Elektromotors 7 ausgelöst werden soll. Aufgrund einer Verzögerung endet die Drehbewegung des Steuerglieds nicht unmittelbar an dem Punkt des Erreichens der Abschaltposition, sondern etwas später.

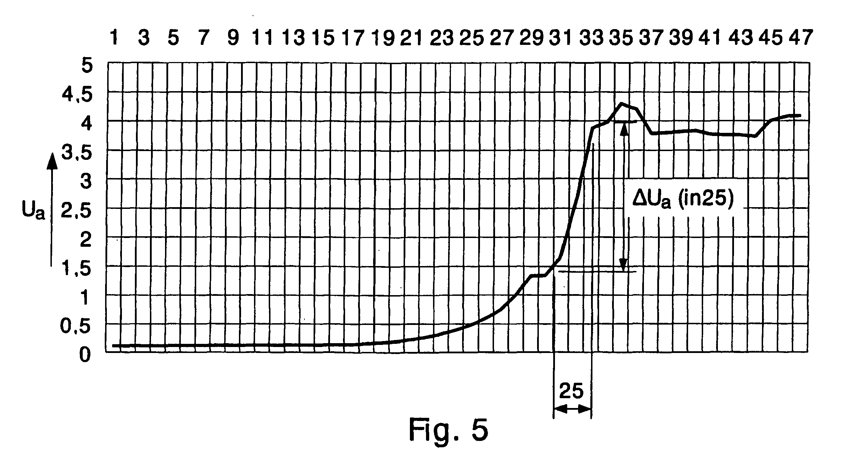

Die Abhängigkeit der Ausgangsspannung des analogen Hall-Sensors 19 von der Drehposition des Steuerglieds 4 bzw. von der Annäherung des Permanentmagneten 18 des Sperrbolzens 3 an den Hall-Sensor 19 ist beispielhaft in Figur 5 gezeigt. In Figur 5 ist die Ausgangsspannung des analogen Hall-Sensors über einem Maß für die Drehstellung des Steuerglieds 4 aufgetragen. Das Diagramm beginnt auf der linken Seite bei einer Sperrposition des Sperrbolzens. Bewegt sich der Sperrbolzen nunmehr langsam aus der Verriegelungsstellung heraus, so ändert sich die Ausgangsspannung zunächst nicht. In einem Abschnitt 25 vor Erreichen der Freigabeendposition zeigt die Ausgangsspannung (Uₐ) eine stärkere, in einem bestimmten Bereich näherungsweise lineare Abhängigkeit vom Weg des Sperrbolzens. Dabei sind die Anordnung des Permanentmagneten und des Hall-Sensors so gewählt, daß das Intervall 25 der stärksten Abhängigkeit der Ausgangsspannung des analogen Hall-Sensors vom zurückgelegten Weg des Sperrbolzens 3 einen Bereich abdeckt, in dem ein Abschalten des Elektromotors 7 ausgelöst werden soll.

Bei der bevorzugten Ausführungsform der erfindungsgemäßen Verriegelungsvorrichtung wird die Ausgangsspannung einem Analog-Digital-Umsetzer, vorzugsweise einem Analog-Digital-Umsetzer in einem auf der Schaltungsplatine 10 vorhandenen Controller zugeführt. Der Controller weist ferner eine Eingabemöglichkeit auf, mit deren Hilfe eingestellt werden kann, bei welcher Ausgangsspannung des Hall-Sensors bzw. bei welchem Ausgabewert des Analog-Digital-Umsetzers die Abbrems- und Abschaltsequenz für den Elektromotor 7 ausgelöst werden soll.

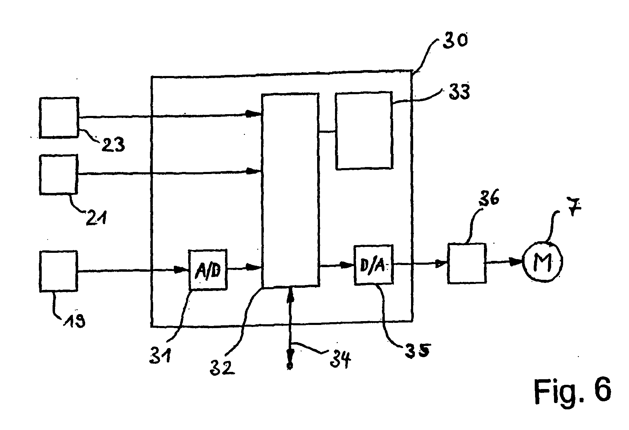

Figur 6 zeigt ein Blockschaltbild der Steuerelektronik mit angekoppelten Hall-Sensoren und dem Motor 7. Die Steuerelektronik umfaßt einen Controller 30 mit einem Prozessor 32 und einem Speicher 33. Der Speicher 33 speichert sowohl Programme als auch Daten. An binäre Eingangsports des Controllers 30 sind die binären Hall-Sensoren 21 und 23 angekoppelt. An einen analogen Eingangsport ist der analoge Hall-Sensor 19 angekoppelt. An dem analogen Eingangsport des Controllers 30 befindet sich ein Analog-Digital-Umsetzer 31, dessen digitaler Ausgabewert von dem Prozessor 32 gelesen wird. Der Prozessor 32 erzeugt einen digitalen Ausgabewert, der der gewünschten Motoransteuerung entspricht. Der digitale Ausgabewert wird einem Digital-Analog-Umsetzer 35 eingegeben. Das analoge Ausgangssignal des Digital-Analog-Umsetzers 35 wird einer Leistungstreiberstufe 36 eingegeben, die den Motor 7 ansteuert. Der Prozessor 32 weist ferner verschiedene Eingabe- und Ausgabemöglichkeiten auf, die durch den Pfeil 34 veranschaulicht sind. Über diese Eingabe/Ausgabe-Anschlüsse kann der Controller 30 programmiert werden. Insbesondere kann bei dem erfindungsgemäßen Betrieb des Controllers 30 derjenige Ausgabewert des Analog-Digital-Umsetzers 31 ausgewählt werden, bei dem dann, wenn sich der Sperrbolzen aus der Sperrposition in die Freigabeendposition bewegt, das Abschalten des Motors 7 ausgelöst werden soll.

## Patentansprüche

1. Verriegelungsvorrichtung (1) für eine Lenkspindel (13) mit:
einer Sperrbolzenanordnung (3),
einem Steuerglied (4), das mit der Sperrbolzenanordnung (3) derart gekoppelt ist, daß durch Drehen des Steuerglieds (4) die Sperrbolzenanordnung (3) in ihrer axialen Richtung zwischen einer Sperrposition und einer Freigabeendposition bewegbar ist,
einem Motorantrieb (6, 7, 8) zum Drehen des Steuerglieds (4),
einer Steuerelektronik (30, 36) zum Steuern des Motorantriebs (6-8) und
einer mit der Steuerelektronik (30, 36) gekoppelten Sensoranordnung (19) zum Erfassen wenigstens einer axialen Position der Sperrbolzenanordnung (3), wobei die Steuerelektronik (30, 36) dann, wenn sich die Sperrbolzenanordnung (3) in der axialen Richtung aus der Sperrposition zu der Freigabeendposition bewegt und die Sensoranordnung (19) ein Ausgangssignal liefert, daß das Erreichen einer Abschaltposition der Sperrbolzenanordnung (3) anzeigt, ein Abschalten des Motorantriebs (6-8) bewirkt, wobei
die Sensoranordnung (19) so ausgebildet ist, daß das Ausgangssignal (Uₐ) zumindest in einem der Freigabeendposition vorausgehenden und eine gewünschte Abschaltposition einschließenden Bewegungsintervall (25) der Sperrbolzenanordnung (3) eine Mehrzahl von monoton von der axialen Position abhängigen Ausgangssignalwerten derart annehmen kann, **dadurch gekennzeichnet, daß** eine Auswahl der gewünschten Abschaltposition durch Auswahl eines zugehörigen Ausgangssignalwerts möglich ist, und
daß die Steuerelektronik (30) eine Auswahleinrichtung (32) aufweist, die die Auswahl eines der gewünschten Abschaltposition entsprechenden Ausgangssignalwerts als Schwellwert ermöglicht, so daß bei Erreichen, Überschreiten oder Unterschreiten des Schwellwerts ein Signal ausgegeben wird, daß das Abschalten des Motorantriebs bewirkt.

2. Verriegelungsvorrichtung nach Anspruch 1, **dadurch gekennzeichnet, daß** das Ausgangssignal (Uₐ) ein analoges Ausgangssignal ist, welches in dem Bewegungsintervall (25) entweder monoton ansteigt oder monoton abfällt.

3. Verriegelungsvorrichtung nach Anspruch 2, **dadurch gekennzeichnet, daß** die Steuerelektronik (30) einen Analog-Digital-Umsetzer (31) aufweist, der das analoge Ausgangssignal (Uₐ) empfängt.

4. Verriegelungsvorrichtung nach einem der Ansprüche 1 bis 3, **dadurch gekennzeichnet, daß** die Auswahleinrichtung programmierbar ist.

5. Verriegelungsvorrichtung nach Anspruch 2, **dadurch gekennzeichnet, daß** die Auswahleinrichtung einen Analogsignalkomparator und einen Referenzspannungsgenerator umfaßt, wobei der Analogsignalkomparator die von dem Referenzspannungsgenerator erzeugte Referenzspannung mit dem analogen Ausgangssignal vergleicht und wobei die Referenzspannung einstellbar ist.

6. Verriegelungsvorrichtung nach Anspruch 3, **dadurch gekennzeichnet, daß** die Auswahleinrichtung einen mit dem Analog-Digital-Umsetzer gekoppelten Komparator und einen mit dem Komparator gekoppelten Referenzwertspeicher umfaßt.

7. Verriegelungsvorrichtung nach einem der Ansprüche 1 bis 6, **dadurch gekennzeichnet, daß** die Sensoranordnung wenigstens einen Hall-Sensor (19) aufweist, der so angeordnet ist, daß er die Annäherung eines mit der Sperrbolzenanordnung (3) gekoppelten Magneten (18) zumindest in einem Abschnitt des Bewegungsintervalls erfassen kann.

8. Verriegelungsvorrichtung nach Anspruch 7, **dadurch gekennzeichnet, daß** die Sensoranordnung einen analogen Hall-Sensor (19) aufweist, der so angeordnet ist, daß er in dem Bewegungsintervall ein von der axialen Position monoton abhängiges Ausgangssignal ausgibt.

9. Verriegelungsvorrichtung nach einem der Ansprüche 1 bis 8, **dadurch gekennzeichnet, daß** die Sensoranordnung ferner wenigstens einen Sensor (21, 23) zum Erfassen einer Drehstellung des Steuerglieds (4) umfaßt.

10. Verriegelungsvorrichtung nach Anspruch 9, **dadurch gekennzeichnet, daß** die Sperrbolzenanordnung (3) durch eine Ausnehmung des Steuerglieds (4) derart hindurchgeführt ist, daß das Steuerglied (4) um die Sperrbolzenanordnung (3) drehbar ist,
daß ein erster Permanentmagnet (18) an der Sperrbolzenanordnung (3) befestigt ist und sich bei Annäherung an die Freigabeendposition an einen analogen ersten Hall-Sensor (19) annähert, und
daß wenigstens ein zweiter Permanentmagnet (20) auf der Oberseite des Steuerglieds (4) derart befestigt ist, daß er bei Erreichen einer vorgebenden Drehstellung des Steuerglieds (4) auf einen zweiten Hall-Sensor (21) einwirkt.

11. Verriegelungsvorrichtung nach Anspruch 10, **dadurch gekennzeichnet, daß** die Permanentmagneten (18, 20) auf der Sperrbolzenanordnung bzw. dem Steuerglied derart angeordnet sind, daß der analoge erste Hall-Sensor (19) und der wenigstens eine zweite Hall-Sensor (21, 23) in einer Ebene angeordnet werden können.

12. Verriegelungsvorrichtung nach Anspruch 11, **dadurch gekennzeichnet, daß** der erste Hall-Sensor (19) und der wenigstens eine zweite Hall-Sensor (21, 23) auf einer gemeinsamen Schaltungsplatine (10) angeordnet sind.

13. Verriegelungsvorrichtung nach einem der Ansprüche 10 bis 12, **dadurch gekennzeichnet, daß** der wenigstens eine auf dem Steuerglied (4) angeordnete Permanentmagnet (20) und der wenigstens eine zweite Hall-Sensor (21, 23) so angeordnet sind, daß sowohl die der Sperrposition als auch die der Freigabeendposition der Sperrbolzenanordnung (3) entsprechenden Drehstellungen des Steuerglieds (4) erfaßt werden können.

## Claims

1. A locking device (1) for a steering shaft (13) including:
a locking bolt arrangement (3),
a control element (4), which is so coupled to the locking bolt arrangement (3) that the locking bolt arrangement (3) is moveable in its axial direction, as a result of rotation of the control element (4), between a locked position and a released end position,
a motor drive (6,7,8) for rotating the control element (4),
an electronic control system (30,36) for controlling the motor drive (6-8), and
a sensor arrangement (19) coupled to the electronic control system (30,36) for detecting at least one axial position of the locking bolt arrangement (3), wherein the electronic control system (30,36) causes the motor drive (6-8) to switch off when the locking bolt arrangement (3) moves in the axial direction out of the locked position to the released end position and the sensor arrangement (19) supplies an output signal, which indicates that the locking bolt arrangement (3) has reached a switch-off position, wherein,
the sensor arrangement (19) is so constructed that the output signal (Uₐ), at least in a movement interval (25) of the locking bolt arrangement which precedes the released end position and includes a desired switch-off position, can adopt a plurality of monotonic output signal values dependent on the axial position,
**characterised in that**
a selection of the desired switch-off position is possible by selection of an associated output signal value, and
that the electronic control system (30) includes a selection device (32), which enables the selection of an output signal value, which corresponds to one of the desired switch-off positions and constitutes a threshold value so that when the value reaches, exceeds or falls below the threshold value, a signal is emitted, which brings about the switching off of the motor drive.

2. A locking device as claimed in claim 1, **characterised in that** the output signal (Uₐ) is an analogue output signal which either increases monotonically or decreases monotonically in the movement interval (25).

3. A locking device as claimed in claim 2, **characterised in that** the electronic control system (30) includes an analogue-digital converter (31), which receives the analogue output signal (Uₐ).

4. A locking device as claimed in one of claims 1 to 3, **characterised in that** the selection device is programmable.

5. A locking device as claimed in claim 2, **characterised in that** the selection device includes an analogue signal comparator and a reference voltage generator, wherein the analogue signal comparator compares the reference voltage produced by the reference voltage generator with the analogue output signal and wherein the reference voltage is adjustable.

6. A locking device as claimed in claim 3, **characterised in that** the selection device includes a comparator coupled to the analogue-digital converter and a reference value store coupled to the comparator.

7. A locking device as claimed in one of Claims 1 to 6, **characterised in that** the sensor arrangement includes at least one Hall sensor (19), which is so arranged that it can detect the approach of a magnet (18) coupled to the locking bolt arrangement (3), at least in a section of the movement interval.

8. A locking device as claimed in Claim 7, **characterised in that** the sensor arrangement includes an analogue Hall sensor (19), which is so arranged that, in the movement interval, it produces an output signal which is monotonically dependent on the axial position.

9. A locking device as claimed in one of Claims 1 to 8, **characterised in that** the sensor arrangement further includes at least one sensor (21, 23) for detecting a rotary position of the control element (4).

10. A locking device as claimed in Claim 9, **characterised in that** the locking bolt arrangement (3) passes through a recess in the control element (4) so that the control element (4) is rotatable about the locking bolt arrangement (3),
that a first permanent magnet (18) is secured to the locking bolt arrangement (3) and, when the release end position is approached, approaches an analogue first Hall sensor (19), and
that at least one second permanent magnet (20) is so fastened to the surface of the control element (4) that, when a predetermined rotary position of the control element (4) is reached, it acts on a second Hall sensor (21).

11. A locking device as claimed in Claim 10, **characterised in that** the permanent magnets (18, 20) are so arranged on the locking bolt arrangement and the control element, respectively, that the analogue first Hall sensor (19) and the at least one second Hall sensor (21, 23) can be disposed in a plane.

12. A locking device as claimed in Claim 11, **characterised in that** the first Hall sensor (19) and the at least one second Hall sensor (21, 23) are disposed on a common printed circuit board (10).

13. A locking device as claimed in one of Claims 10 to 12, **characterised in that** the at least one permanent magnet (20) arranged on the control element (4) and the at least one second Hall sensor (21, 23) are so arranged that both the rotary position of the control element (4) corresponding to the locked position and the rotary position of the control element (4) corresponding to the release end position of the locking bolt arrangement (3) can be detected.

## Revendications

1. Dispositif de verrouillage (1) pour un arbre de direction (13), comprenant :
un aménagement à boulon de blocage (3),
un organe de commande (4), qui est couplé à l'aménagement à boulon de blocage (3) de sorte qu'une rotation de l'organe de commande (4) puisse déplacer l'aménagement à boulon de blocage (3) dans sa direction axiale entre une position de blocage et une position terminale de libération,
une motorisation (6, 7, 8) pour faire tourner l'organe de commande (4),
un circuit électronique de commande (30, 36) pour commander la motorisation (6 à 8) et
un aménagement de détection (19) couplé au circuit électronique de commande (30, 36) pour détecter au moins une position axiale de l'aménagement à boulon de blocage (3), dans lequel le circuit électronique de commande (30, 36) provoque une déconnexion de la motorisation (6 à 8) lorsque l'aménagement à boulon de blocage (3) se déplace dans la direction axiale de la position de blocage à la position terminale de libération et l'aménagement de détection (19) délivre un signal de sortie pour indiquer qu'une position de déconnexion de l'aménagement à boulon de blocage (3) est atteinte,
lequel aménagement de détection (19) est conformé de sorte que le signal de sortie (Uₐ) puisse adopter une pluralité de valeurs de signal de sortie dépendant de manière monotone de la position axiale au moins dans un intervalle de déplacement (25) de l'aménagement à boulon de blocage (3) précédant la position terminale de libération et comprenant une position de déconnexion souhaitée, **caractérisé en ce qu'**un choix de la position de déconnexion souhaitée est possible en choisissant une valeur du signal de sortie correspondante, et
**en ce que** le circuit électronique de commande (30) présente un dispositif de sélection (32), qui permet de choisir comme valeur de seuil une valeur de signal de sortie correspondant à la position de déconnexion souhaitée de manière à délivrer un signal qui provoque la déconnexion de la motorisation lorsqu'on se situe à la valeur de seuil, qu'on la dépasse ou qu'on se situe en dessous.

2. Dispositif de verrouillage selon la revendication 1, **caractérisé en ce que** le signal de sortie (Uₐ) est un signal de sortie analogique, qui augmente ou diminue de manière monotone dans l'intervalle de déplacement (25).

3. Dispositif de verrouillage selon la revendication 2, **caractérisé en ce que** le circuit électronique de commande (30) présente un convertisseur analogique/numérique (31), qui reçoit le signal de sortie analogique (Uₐ).

4. Dispositif de verrouillage selon l'une quelconque des revendications 1 à 3, **caractérisé en ce que** le dispositif de sélection est programmable.

5. Dispositif de verrouillage selon la revendication 2, **caractérisé en ce que** le dispositif de sélection comprend un comparateur de signal analogique et un générateur de tension de référence, dans lequel le comparateur de signal analogique compare la tension de référence générée par le générateur de tension de référence au signal de sortie analogique et dans lequel la tension de référence est réglable.

6. Dispositif de verrouillage selon la revendication 3, **caractérisé en ce que** le dispositif de sélection comprend un comparateur couplé au convertisseur analogique/numérique et une mémoire de valeurs de référence couplée au comparateur.

7. Dispositif de verrouillage selon l'une quelconque des revendications 1 à 6, **caractérisé en ce que** l'aménagement de détection présente au moins un capteur de Hall (19), qui est aménagé de manière à pouvoir détecter le rapprochement d'un aimant (18) couplé à l'aménagement à boulon de blocage (3) au moins dans une section de l'intervalle de déplacement.

8. Dispositif de verrouillage selon la revendication 7, **caractérisé en ce que** l'aménagement de détection présente un capteur de Hall analogique (19), qui est aménagé de manière à délivrer dans l'intervalle de déplacement un signal de sortie dépendant de manière monotone de la position axiale.

9. Dispositif de verrouillage selon l'une quelconque des revendications 1 à 8, **caractérisé en ce que** l'aménagement de détection comprend en outre au moins un capteur (21, 23) pour détecter une position en rotation de l'organe de commande (4).

10. Dispositif de verrouillage selon la revendication 9, **caractérisé en ce que** l'aménagement à boulon de blocage (3) est enfilé à travers un évidement de l'organe de commande (4) de sorte que l'organe de commande (4) puisse tourner autour de l'aménagement à boulon de blocage (3),
**en ce qu'**un premier aimant permanent (18) est fixé sur l'aménagement à boulon de blocage (3) et se rapproche d'un premier capteur de Hall analogique (19) lors d'un rapprochement avec la position terminale de libération, et
**en ce qu'**au moins un deuxième aimant permanent (20) est fixé sur la face supérieure de l'organe de commande (4) de sorte qu'il agisse sur un deuxième capteur de Hall (21), lorsqu'une position en rotation prédéfinie de l'organe de commande (4) est atteinte.

11. Dispositif de verrouillage selon la revendication 10, **caractérisé en ce que** les aimants permanents (18, 20) sont agencés sur l'aménagement à boulon de blocage ou sur l'organe de commande de sorte que le premier capteur de Hall analogique (19) et le au moins un deuxième capteur de Hall (21, 23) puissent être aménagés dans un plan.

12. Dispositif de verrouillage selon la revendication 11, **caractérisé en ce que** le premier capteur de Hall (19) et le au moins un deuxième capteur de Hall (21, 23) sont aménagés sur une platine de commutation commune (10).

13. Dispositif de verrouillage selon l'une quelconque des revendications 10 à 12, **caractérisé en ce que** le au moins un aimant permanent (20) aménagé sur l'organe de commande (4) et le au moins un deuxième capteur de Hall (21, 23) sont aménagés de manière à pouvoir détecter tant les positions en rotation de l'organe de commande (4) correspondant à la position de blocage que celles correspondant à la position terminale de libération de l'aménagement à boulon de blocage (3).
